Europäisches Patentamt

European Patent Office

Office européen des brevets

(19)

(11) Publication number: **0 022 825**
**B1**

(12) **EUROPEAN PATENT SPECIFICATION**

(45) Date of publication of patent specification: 21.03.84

(21) Application number: 80900223.1

(22) Date of filing: 04.01.80

(86) International application number:
PCT/US80/00010

(87) International publication number:
WO 80/01419 10.07.80 Gazette 80/15

(51) Int. Cl.³: **B 23 K  26/06,**
**G 02 B  17/06, G 02 B  5/08**

(54) **METHOD OF TREATING A WORKPIECE BY DIRECTING A BEAM OF RADIATION ON TO IT.**

(30) Priority: 04.01.79 US 1038

(43) Date of publication of application:
28.01.81 Bulletin 81/4

(45) Publication of the grant of the patent:
21.03.84 Bulletin 84/12

(84) Designated Contracting States:
DE FR GB NL SE

(56) References cited:
US - A - 2 406 798
US - A - 3 642 343
US - A - 3 953 706
US - A - 3 986 767
US - A - 4 001 543
US - A - 4 017 708
US - A - 4 048 464
US - A - 4 058 699
US - A - 4 079 230
US - A - 4 160 894

(73) Proprietor: UNITED TECHNOLOGIES
CORPORATION
United Technologies Building 1, Financial Plaza
Hartford, CT 06101 (US)

(72) Inventor: DAVIS, Jack William
178 Grande Road
East Hartford, CT 06118 (US)
Inventor: BLASZUK, Paul Raymond
RFD 2
Lebanon, CT 06249 (US)

(74) Representative: Waxweiler, Jean
OFFICE DENNEMEYER S.à.r.l. 21-25 Allée
Scheffer P.O.Box 41
L-2010 Luxembourg (LU)

Method of treating a workpiece by directing a beam of radiation onto it.

### Technical field

The present invention relates to material processing and to an apparatus adapted for time averaging the intensity distribution of a beam of radiation.

Material processing applications typically require a rapid control scanning of a beam of high power radiation over the surface of a workpiece. Many heat treating applications utilizing laser radiation, such as transformation hardening of metal surfaces, require relatively precise control of the beam intensity incident onto the workpiece. Too intense a beam of radiation will produce melting of the surface material while too weak a beam produces insufficient depth of the transformation hardened surface to be of use. A beam of radiation having high power typically has an intensity cross-sectional distribution which varies considerably in the radial and azimuthal directions. Although the average intensity distribution may be adequate for the intended application, such as surface hardening, welding, etc., radiation hot spots and cold spots within the beam resulting from variations in the intensity distribution interact with the workpiece producing inhomogeneities in the interaction zone therein.

One method of time averaging the intensity distribution of a high power beam of radiation incident onto a workpiece is to oscillate the beam across the workpiece-radiation interaction zone. This method has been clearly demonstrated in electron beam technology wherein electron beams due to their electric charge can be readily scanned over an interaction zone with electric or magnetic means. Electrooptical and mechanical scanning means are available for low frequency oscillation of a beam of laser radiation typically having low power. However, low frequency oscillation of the beam to obtain time averaging of the intensity distribution does not improve material processing since the reaction time of the material is typically more rapid than the time required to scan the beam across the interaction zone and the beam material interaction retains the characteristics of that produced by a non-oscillating beam.

### Background art

United States patent No 4261636 discloses a mechanical scanning apparatus adapted for oscillating the focused zone of a beam of radiation having high power over an interaction zone on a workpiece to time average the intensity distribution of the radiation on the workpiece. The apparatus includes a compound beam adapted for being vibrated in a vibratory mode resulting in oscillatory motion of at least one end of the compound beam. A reflective surface fixedly attached to the end of the compound beam is adapted for focusing a beam of radiation incident thereon to a focused zone. Vibrating the compound beam in a fundamental vibration mode results in the end of the beam moving at the same frequency producing an oscillation of the focused zone. The rapid controlled scanning of the radiation across the interaction zone on the workpiece reduces the average intensity of the beam energy input onto the workpiece while maintaining a high instantaneous intensity on the interaction zone to promote effective coupling of the radiation with the workpiece. The apparatus is adapted for producing line scans and curvilinear scans of the focus zone to obtain radial and azimuthal time averaging of the intensity distribution of the radiation incident onto the workpiece.

US patent No 2406798 discloses for a direction finder a beam rotator having an axis of rotation,

a first mirror for receiving a beam of radiation and disposed along said axis at a first angle with respect thereto,

a second mirror offset from said axis of rotation and parallel thereto and disposed to receive radiation from said first mirror,

a third mirror disposed along said axis so as to receive radiation reflected by said second mirror from said first mirror and disposed at a second angle substantially complementary to said first angle so that radiation is reflected from said third mirror along an exit path substantially parallel to said axis of rotation; and

means for rotating said mirror arrangement about said axis of rotation.

### Disclosure of invention

The object of the present invention is to provide a method to time average the intensity distribution of a beam of radiation incident onto a workpiece, as well as an apparatus for carrying out said method.

According to the invention said object is achieved by means of the method claimed in claim 1 and the apparatus claimed in claim 4.

A primary advantage of the present invention is the time averaging of the intensity distribution of the radiation on a workpiece. Also the apparatus is adapted for operation with a beam of radiation having any arbitrary shape. Additionally the beam rotates at twice the angular frequency the housing rotates thereby reducing the required rotation speed of the housing to achieve a desired beam rotational speed. Also, with the third mirror displaced from the centerline axis, both azimuth and radial time averaging of the intensity distribution in the beam is possible. Additionally the apparatus is bilateral in that radiation may be passed therethrough from both the entrance and exit ports.

### Brief description of the drawings

Fig. 1 is a simplified cross-sectional view of an apparatus adapted for time averaging the cross-sectional intensity distribution of a beam of radiation incident onto a workpiece in accordance with the present invention;

Fig. 2A is a simplified schematic representation of a beam of radiation having a cross-sectional intensity distribution with an intensity spike disposed at a radial position;

Fig. 2B is a simplified schematic representation of the time average intensity distribution of the distribution as shown in Fig. 2A on a workpiece;

Fig. 3 is a simplified schematic representation of an embodiment of the present invention;

Fig. 4A is a simplified representation of an intensity distribution of a beam of radiation;

Fig. 4B is a simplified representation of the intensity distribution as shown in Fig. 4A time averaged by the embodiment depicted in Fig. 1; and

Fig. 4C is a simplified representation of the time averaged intensity distribution on a workpiece of the distribution as shown in Fig. 4A produced by the embodiment depicted in Fig. 3.

Best mode for carrying out the invention

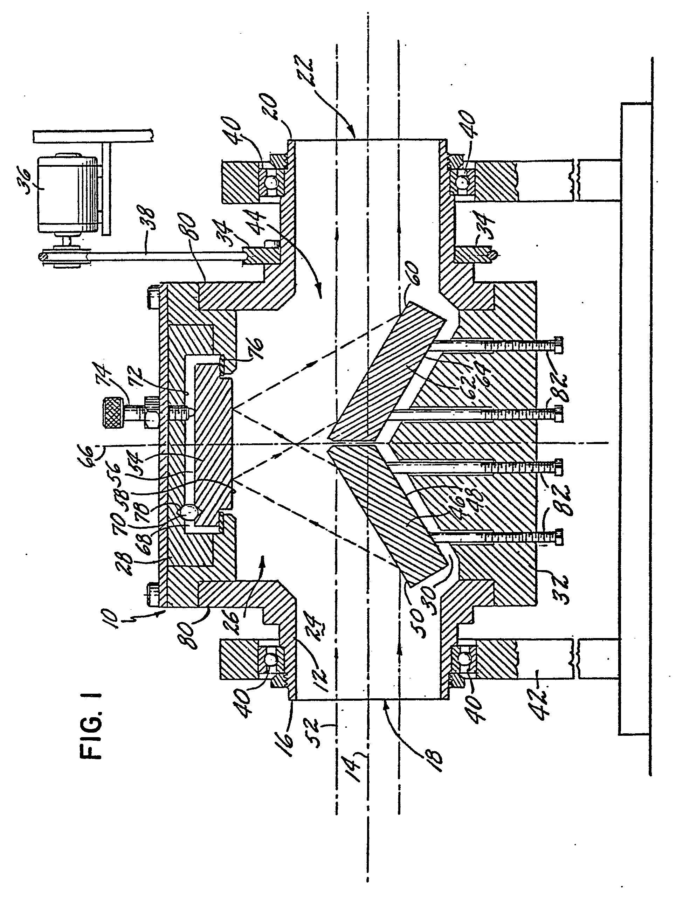

Referring now to Fig. 1 which shows a simplified cross-sectional view of an apparatus adapted for time averaging the cross-sectional intensity distribution of a beam of radiation incident on a workpiece in accordance with the present invention. The apparatus includes a housing 10 having a sidewall 12 with a cylindrical configuration longitudinally disposed about a centerline axis 14, a first end 16 having an entrance port 18 centrally disposed therein, a second end 20 having an exit port 22 centrally disposed therein, an interior passage 24 disposed between the first end and the second end wherein the entrance port, the interior passage and the exit port are symmetrically disposed about the centerline axis and are adapted for passing a beam of radiation therethrough.

The housing further includes a first adjustment channel 26, centrally located on the sidewall and perpendicularly disposed to the centerline axis, adapted for providing radial access to the internal passage 24 and for accommodating a first mirror holder 28 and a second adjustment channel 30 centrally located on the sidewall diametrically opposed the first adjustment channel and perpendicularly disposed to the centerline axis, adapted for providing radial access to the interior passage and for accommodating a second mirror holder 32. The housing is adapted for rotation about the centerline axis by a pulley 34 fixedly attached to the sidewall and connected to motor means 36 by a drive belt 38. Bearings 40 disposed about the sidewall proximate the first and second ends are adapted for maintaining the alignment of the housing about the centerline axis during rotation and for rotatably supporting the housing within a support structure 42.

A beam inverter 44 centrally disposed within the interior passage 24 and in alignment with the first and second adjustment channels 26, 30 respectively, includes a first mirror 46, having a back surface 48 and a reflective surface 50 angularly disposed to the centerline axis, adapted for intercepting a beam of radiation 52 passing through the entrance port into the interior passage and reflecting said radiation to a second mirror 54, adjustably attached to the first mirror holder 28, having a back surface 56 and a reflective surface 58 disposed in a spaced apart, substantially parallel, relationship with the centerline axis 14 wherein the reflective surface is adapted for directing the radiation incident thereon from the reflective surface of the first mirror to a reflective surface 60 of a third mirror 62 angularly disposed to the centerline axis 14 for directing the radiation through the exit port 22 and having a back surface 64 disposed in an angular relationship with the back surface 48 of the first mirror 46 such that a plane 66 orthogonally disposed to the centerline axis and passing through the second mirror bisects the angle between the reflective surfaces of the first and third mirrors. The reflective surface of the first, second and third mirrors are aligned such that the propagation axis of the radiation 52 incident onto the reflective surface of the first mirror is superimposed on the propagation axis of radiation reflected through the exit port 22 by the reflective surface of the third mirror and coincident with the centerline axis 14. The reflective surfaces of the beam inverter are adapted for inverting the coordinate positions of radiation passing through the housing about an axis orthogonally disposed to the rotation axis and to an axis within the plane 66 perpendicularly disposed to the reflective surface of the second mirror and for providing a reflective surface attached to the housing and adapted for rotation therewith, thereby providing rotation of a beam of radiation incident thereon proportional to the rotation rate of the housing. In the preferred embodiment the apparatus is adapted for rotating the beam at twice the rotation rate of the housing.

The second mirror 54, positioned within a cavity 68 in the first mirror holder 28, is adapted for small angular rotation about a pivot ball 70 disposed within the cavity between the back surface 56 of the mirror and a cavity wall 72 for providing small adjustments to control the propagation direction of the beam of radiation passing through the exit port. An adjustment screw 74 passing through the first mirror holder and positioned against the back surface of the second mirror is adapted for forcing the second mirror against a resilient ring 76 such as an "O" ring or wave washer disposed around the edge of the reflective surface of the second mirror between the second mirror and the first mirror holder for rotating the second mirror about the pivot ball to provide angular displacement of the reflective surface for adjusting the propagation direction of the beam. When the force applied by the adjustment screw is decreased, the resilient ring forces the second mirror against the screw to maintain the second mirror securely positioned within the holder. In the preferred embodiment the pivot ball is positioned within slots 78 in the back surface of the second mirror and the cavity wall to inhibit movement of the ball. The first mirror holder is adapted for being inserted into the first adjustment channel and fixedly attached to channel walls 80 defining the first adjustment channel by screws (not shown) or the like.

The first and third mirrors 46, 62 respectively, are positioned on the second mirror holder 32 within the second adjustment channel 30 by alignment screws 82 adapted for securing the first and third mirrors to the second mirror holder and for making fine adjustments to the angular displacement of the first and third mirrors with respect to the centerline axis for controlling the propagation direction of the radiation passing through the housing and for adjusting the relative elevation of the centroid of each mirror with respect to the centerline axis. In the preferred embodiment the alignment screws 82 are preferably a triplet group of screws, attached to each mirror, wherein each screw in the triplet group is adapted for providing independent rotation of each mirror about orthogonal axes by means well known in the art.

In operation a beam of radiation 52 preferably having a propagation axis superimposed on the centerline axis 14 of the housing passes into the housing through the entrance port 16 and is incident onto the reflective surface 50 of the first mirror 46 which directs the radiation to the second mirror 54 wherein the radiation is reflected to the reflective surface 60 of the third mirror 62 which directs the radiation through the exit port 22 with a propagation axis superimposed on the centerline axis as noted hereinbefore. The reflective surfaces of the mirrors within the beam inverter 44 are adapted for inverting the coordinate position of the radiation passing through the housing such that as the beam inverter rotates about the centerline axis at a rotation frequency of W, the beam passing through the exit port rotates at a rotation frequency of 2W. It is to be recognized that the present invention is adapted for rotating a beam having any cross-sectional configuration provided that the first, second and third mirrors intercept and reflect the entire cross-sectional area of the beam. It is also to be recognized that a beam passing through the entrance port 14 may be propagating as a parallel beam, a diverging beam, or a converging beam and is typically limited only to having a diameter less than the diameter of the reflective surfaces of the mirrors within the beam inverter and to having a power density below the threshold for inducing damage on the reflective surfaces.

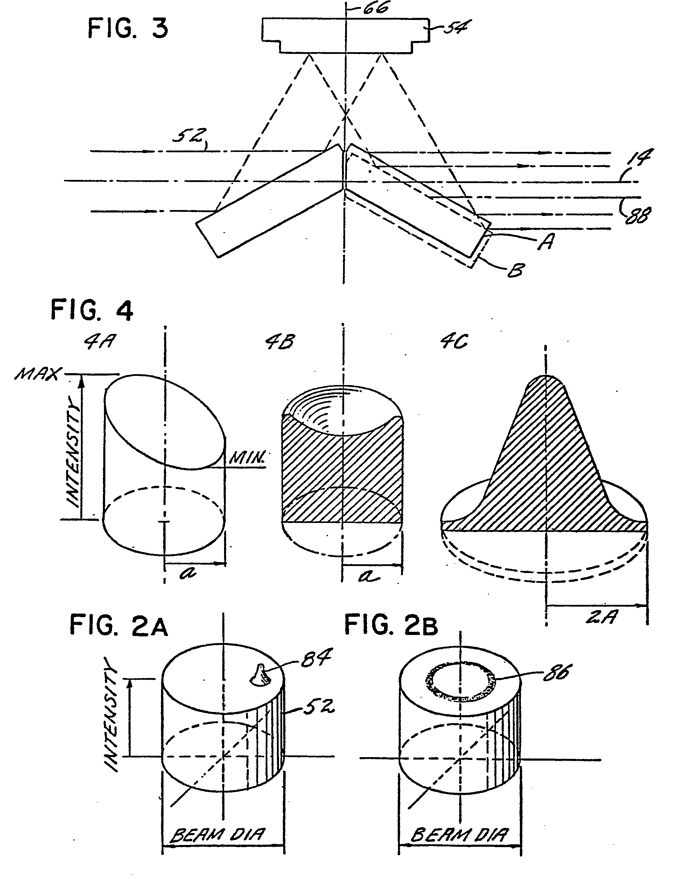

In the preferred embodiment the radiation is rotated about its propagation axis with the rotation having circular symmetry. The rotational symmetry results in an azimuthal time averaging of the intensity distribution of the radiation incident onto a workpiece. Fig. 2A shows a simplified schematic representation of a beam of radiation 52 having a cross-sectional intensity distribution with an intensity spike 84 disposed at a radial position in the distribution. When this distribution is rotated in accordance with the present invention the time averaged intensity distribution on a workpiece will be as represented in Fig. 2B. A ring 86 approximating the time average of the intensity spike 84 on the workpiece in the azimuthal direction is shown having radial symmetry about the rotation axis and a time averaged intensity in the azimuthal direction.

Radial and azimuthal time averaging of the intensity distribution of the beam is accomplished by displacing the third mirror from a first position A to a second position B as shown in Fig. 3 wherein the radiation passing through the exit port has a propagation axis 88 displaced from the centerline axis 14. It is to be recognized that the alignment screws 82 as shown in Fig. 1, are adapted for displacing the centroid of the third mirror in a radial direction from the centerline axis and for providing the angular alignment of the reflective surface as hereinbefore noted. In operation as the housing is rotated, the radiation passing through the exit port traces out an epicycloid as it rotates about the centerline axis rather than the circle obtained from the operation of the preferred embodiment. Thus time averaging of some of the radial variations of the intensity distribution incident on a workpiece is accomplished. It is to be recognized that the rotation rate of the beam on a workpiece must be rapid to provide time averaging of the intensity distribution in a time shorter than the characteristic time of the material of the workpiece such that the workpiece effectively interacts with the time averaged beam. A slow rotation rate will result in a radiation-workpiece interaction similar to the interaction with no time averaging.

Figs. 4A, B and C are schematic representations of the averaging effect of the present invention on a beam of radiation having an intensity distribution with a maximum on one side and a minimum on a diametrically opposed side as shown in Fig. 4A. When operated in accordance with the preferred embodiment the radiation as shown in Fig. 4A is azimuthally averaged on a workpiece resulting in the time averaged distribution on the workpiece as shown in Fig. 4B, wherein the distribution at the center remains relatively constant with the intensity distribution at the edge of the beam essentially azimuthally time averaged between the maximum and minimum values. Operating the present invention with the third mirror having its centroid displaced from the centerline axis results in the distribution as shown in Fig. 4C wherein the intensity at the center remains essentially equal to the maximum value as shown in Fig. 4A while the intensity at the outer radius of the interaction zone has a value approximating a time average intensity of the minimum value shown in Fig. 4A and an interaction zone having essentially twice the diameter as shown in Fig. 4B. The larger diameter results from the wobble induced on the beam by the off-axis rotation of the third mirror. The distribution as shown in Fig. 4C is time averaged in the azimuthal direction and in the radial direction.

Referring now to Figs. 1 and 3, it is to be recognized that the apparatus as shown in Fig. 1 must be dynamically balanced about the centerline axis 14 and about the plane 66 for high speed rotation. For the embodiment as shown in Fig. 3, displacement of the centroid of the third mirror from position A to position B results in a dynamic imbalance to the system. Counterweights typically attached to the second mirror holder behind the first mirror are utilized to dynamically balance the apparatus about the plane 66 and are attached to the first mirror holder 28 typically about the position of the plane 66 for dynamically balancing the apparatus about the centerline axis. It is to be recognized that dynamic balancing by means well known in the art may be required for high speed rotation of the apparatus when utilized in any embodiment.

Although the present invention is shown utilizing a pulley drive means, it is to be recognized that the housing 10 may be rotated by any of the means well known in the art for rotating the housing at high rotation rates.

Although this invention has been shown and described with respect to preferred embodiments thereof, it should be understood by those skilled in the art that various changes and omissions in the form and detail thereof may be made therein without departing from the invention.

## Claims

1. A method of treating a workpiece by directing a beam of radiation along a path onto said workpiece, characterized by time averaging the intensity distribution of the radiation incident on the workpiece by directing the beam of radiation through a beam inverter having reflective surfaces for inverting the pattern of radiation in one direction perpendicular to said path, and rotating said beam inverter at a first angular frequency about an axis of rotation parallel to said path so that the pattern of radiation rotates about said rotation axis at a second angular frequency which is twice said first angular frequency.

2. A method according to claim 1 further characterized by rotating said beam inverter about a rotation axis which is coincident with the center of the path of radiation directed toward said workpiece so that the pattern of radiation incident on said workpiece rotates about a single point of said workpiece to provide azimuthal time averaging of the intensity distribution of radiation incident on said workpiece.

3. A method according to claim 1 further characterized by positioning one of said reflective surfaces in said beam inverter in a manner to offset the center of the path of radiation directed by said beam inverter toward said workpiece from said axis of rotation so that the pattern of radiation incident on said workpiece rotates as an epicycloid on said workpiece to provide radial and azimuthal time averaging of the intensity distribution of radiation incident on said workpiece.

4. An apparatus for carrying out the method according to claim 3 comprising: a housing (10) having:

an axis of rotation (14),

a first mirror (46) for receiving a beam of radiation from a source and disposed along said axis of rotation (14) at a first angle with respect to said axis of rotation so that the center of said beam incident on said mirror substantially coincides with said first mirror,

a second mirror (54) offset from said axis of rotation (14) and parallel thereto and disposed to receive radiation from said first mirror, and

a third mirror (62) disposed near said axis (14) so as to receive radiation reflected by said second mirror (54) from said first mirror (46) and disposed at a second angle substantially complementary to said first angle so that radiation is reflected from said third mirror (62) along an exit path (88) substantially parallel to said axis of rotation (14); and

means (34, 36, 38) for rotating said housing about said axis of rotation (14) so that the pattern of radiation is rotated about said exit path to provide azimuthal time averaging of the intensity distribution of the radiation;

the said third mirror (62) being offset from said axis of rotation (14) so that the center of said exit path (88) is displaced from said axis of rotation (14) and the intensity distribution of radiation rotates as an epicycloid so as to provide radial, as well as azimuthal time averaging of the intensity distribution of radiation along said exit path (88).

## Patentansprüche

1. Verfahren zur Behandlung eines Werkzeuges bei dem ein Strahlungsstrahl entlang eines Weges auf das Werkzeug gerichtet wird, gekennzeichnet durch zeitliches Mitteln der Intensitätsverteilung der auf das Werkstück ein-

fallenden Strahlung dadurch, dass man den Strahlungsstrahl durch einen Strahlumkehrer hindurchschickt, mit reflektierenden Oberflächen zum Umkehren des Strahlungsmusters in eine Richtung senkrecht zum Weg und den Strahlumkehrer mit einer ersten Winkelgeschwindigkeit um eine Drehachse parallel zum Weg dreht, so dass das Strahlungsmuster um die Drehachse mit einer zweiten Winkelgeschwindigkeit dreht, welche zweimal so gross wie die erste Winkelgeschwindigkeit ist.

2. Verfahren nach Anspruch 1, dadurch gekennzeichnet, dass man den Strahlumkehrer um eine Drehachse dreht, welche mit dem Mittelpunkt des Weges der Strahlung, welche auf das Werkzeug gerichtet ist zusammenfällt, so dass das Strahlungsmuster, welches auf das Werkstück auftrifft, um einen einzigen Punkt des Werkstückes dreht, um eine azimutale zeitliche Mittelwertbildung der Intensitätsverteilung der auf das Werkstück auftreffenden Strahlung zubewirken.

3. Verfahren nach Anspruch 1, dadurch gekennzeichnet, dass man eine der reflektierenden Flächen in dem Strahlumkehrer in einer Weise anordnet, dass der Mittelpunkt des Weges der Strahlung, welche vom Strahlumkehrer auf das Werkzeug gerichtet wird, gegen die Drehachse versetzt ist, so dass das Strahlungsmuster, welches auf das Werkzeug auftrifft, als Epizykloid auf dem Werkstück rotiert, um eine radiale und azimutale zeitliche Mittelwertbildung der Intensitätsverteilung der auf das Werkstück auftreffenden Strahlung zu bewirken.

4. Vorrichtung zur Durchführung des Verfahrens nach Anspruch 3, mit einem Gehäuse (10) mit einer Drehachse (14), einem ersten Spiegel (46) zur Aufnahme eines Strahlungsstrahles von einer Quelle und welcher entlang der Drehachse (14) unter einem ersten Winkel bezüglich der Drehachse angeordnet ist, so dass der Mittelpunkt des auf den Spiegel auffallenden Strahles im wesentlichen mit dem ersten Spiegel zusammenfällt, einem zweiten Spiegel (54), welcher gegenüber der Drehachse (14) versetzt ist und parallel dazu steht und angeordnet ist, um die Strahlung von dem ersten Spiegel aufzunehmen und einem dritten Spiegel (62), welcher nahe an der Achse (14) angeordnet ist, um so die von dem zweiten Spiegel (54) reflektierte Strahlung vom ersten Spiegel (46) aufzunehmen und welcher unter einem zweiten Winkel, welcher im wesentlichen komplementär zum ersten Winkel ist, angeordnet ist, so dass die Strahlung von dem dritten Spiegel (62) entlang eines Ausgangsweges (88) reflektiert wird, welcher im wesentlichen parallel zur Drehachse (14) ist; und mit Mitteln (34, 36, 38) zur Drehung des Gehäuses um die Drehachse (14), so dass das Strahlungsmuster um den Ausgangsweg rotiert wird, um eine azimutale zeitliche Mittelwertbildung der Intensitätsverteilung der Strahlung zu liefern; wobei der dritten Spiegel (62) gegenüber der Drehachse (14) versetzt ist, so dass der Mittelpunkt des Ausgangsweges (88) gegenüber der Drehachse (14) verschoben ist und die Intensitätsverteilung der Strahlung als Epizykloid rotiert, um so eine radiale, wie auch azimutale zeitliche Mittelwertbildung der Intensitätsverteilung der Strahlung entlang des Ausgangsweges (88) zu liefern.

**Revendications**

1. Procédé de traitement d'une pièce à usiner selon lequel un faisceau de radiation est dirigé le long d'un chemin sur ladite pièce à usiner, caractérisé par la formation de la moyenne dans le temps de la distribution d'intensité de la radiation incidente sur la pièce à usiner en dirigeant le faisceau de radiation à travers un inverseur de faisceau ayant des surfaces réfléchissantes pour invertir le modèle de radiation dans une direction perpendiculaire au dit chemin et en tournant l'inverseur de faisceau à une première vitesse angulaire autour d'un axe de rotation parallèle au dit chemin de sorte que le modèle de la radiation tourne autour de l'axe de radiation à une seconde vitesse angulaire qui est le double de la première vitesse angulaire.

2. Procédé selon la revendication 1, caractérisé en ce qu'on fait tourner l'inverseur de faisceau autour d'un axe de rotation qui coïncide avec le centre du chemin de radiation dirigé vers la pièce à usiner, de sorte que le modèle de la radiation incidente sur la pièce à usiner tourne autour d'un point unique de la pièce à usiner pour fournir une formation de la moyenne azimutale dans le temps de la distribution de l'intensité de la radiation incidente sur la pièce à usiner.

3. Procédé selon la revendication 1, caractérisé en ce qu'on positionne une des surfaces réfléchissantes dans l'inverseur de faisceau d'une manière à déplacer le centre du chemin de la radiation dirigé par l'inverseur de faisceau vers la pièce à usiner de l'axe de rotation de sorte que le modèle de la radiation incidente sur la pièce à usiner tourne comme une épicycloïde sur la pièce à usiner pour fournir une formation de la moyenne dans le temps radiale et azimutale de la distribution d'intensité de la radiation incidente sur la pièce à usiner.

4. Appareil pour la mise en oeuvre du procédé selon la revendication 3, comprenant un boîtier (10) ayant un axe de rotation (14), un premier miroir (46) pour recevoir un faisceau de radiation d'une source et disposé le long de l'axe de rotation (14) sous un premier angle par rapport au dit axe de rotation de sorte que le centre du faisceau incident sur le miroir coïncide substantiellement avec le premier miroir, un second miroir (54) déplacé de l'axe de rotation (14) et parallèle à celle-ci et disposé pour recevoir la radiation du premier miroir, et un troisième miroir (62) disposé à proximité de l'axe (14) de sorte à recevoir la radiation réfléchie par le second miroir (54) du premier miroir (46) et disposé sous un second angle substantiellement complémentaire au premier angle, de sorte que la radiation est réfléchie par la troisième miroir (62) le long d'un chemin de sortie (88) substantiellement parallèle à l'axe de rotation (14); et des moyens (34, 36, 38) pour tourner le boîtier autour de l'axe de rotation (14) de sorte que le modèle de la radiation est tourné autour de l'axe de sortie pour fournir la formation de la moyenne dans le temps azimutale de la distribution d'intensité de la radiation; le troisième miroir (62) étant déplacé de l'axe de rotation (14) de sorte que le centre du chemin de sortie (88) est déplacé de l'axe de rotation (14) et la distribution d'intensité de la radiation tourne comme une épicycloïde de sorte à fournir une formation de la moyenne dans le temps radiale aussi bien qu'azimutale de la distribution d'intensité de la radiation le long du chemin de sortie (88).

FIG. I

1

FIG. 3

FIG. 4

4A  4B  4C

FIG. 2A  FIG. 2B